(19) Europäisches Patentamt
European Patent Office
Office européen des brevets

(11) **EP 0 544 576 B1**

(12) **FASCICULE DE BREVET EUROPEEN**

(45) Date de publication et mention
de la délivrance du brevet:
**28.10.1998 Bulletin 1998/44**

(51) Int Cl.6: **H02P 7/00**, G01D 5/20,
G01D 3/02, F16F 13/00

(21) Numéro de dépôt: **92403147.9**

(22) Date de dépôt: **23.11.1992**

(54) **Moteur linéaire asservi à réluctance variable**

Linear Servomotor mit veränderlicher Reluktanz

Variable reluctance linear servomotor

(84) Etats contractants désignés:
**BE DE ES FR GB IT LU NL SE**

(30) Priorité: **26.11.1991 FR 9114576**

(43) Date de publication de la demande:
**02.06.1993 Bulletin 1993/22**

(73) Titulaire: **HUTCHINSON**
**F-75384 Paris Cédex 08 (FR)**

(72) Inventeur: **Gennesseaux, André**
**F-75012 Paris (FR)**

(74) Mandataire: **Fréchède, Michel et al**
**Cabinet Plasseraud**
**84, rue d'Amsterdam**
**F-75009 Paris (FR)**

(56) Documents cités:
EP-A- 0 379 391          EP-A- 0 440 536

- TECHNISCHES MESSEN TM. vol. 49, no. 2, Février 1982, MUNCHEN DE pages 43 - 49 P. KRISCHKER ET AL. 'Induktiver Differential-Querankergeber hoher Aufl sung'
- IEEE JOURNAL OF SOLID-STATE CIRCUITS vol. 25, no. 2, Avril 1990, NEW YORK pages 441 - 450 FATHY F. YASSA ET AL. 'A Multichannel Digital Demodulator for LVDT/RVDT Position Sensors'
- JAPANESE PATENTS REPORT Section EI, Week 8733, 26 Août 1987 Derwent Publications Ltd., London, GB; Class S, AN 87-233564 & SU-A-1 280 318 (MINSK WIRELESS ENG) 30 Décembre 1986

## Description

L'invention est relative à un moteur ou transducteur linéaire asservi à réluctance variable.

Lorsqu'on souhaite produire des mouvements linéaires, notamment alternatifs, la solution la plus connue actuellement consiste à utiliser un moteur électrodynamique, tel que ceux qui sont actuellement utilisés dans les haut-parleurs. De conception très simple, ces types de moteur permettent d'obtenir une réponse en fréquence dont la fréquence de coupure est élevée, couramment supérieure à 20 kHz.

Toutefois, ce type de moteur présente des inconvénients, tels que par exemple faible valeur de la force engendrée par ce type de moteur pour une masse et un encombrement donnés, en raison de l'utilisation d'un aimant permanent. Ce type de composant est également très coûteux lorsque des forces plus élevées doivent être engendrées.

Lorsqu'il est nécessaire d'engendrer des forces de valeur élevée, il est avantageux d'utiliser un électroaimant.

Toutefois, ce type de composant présente l'inconvénient d'être instable, la partie mobile attirée par la force engendrée par l'électro-aimant venant alors en butée, ce type de composant étant essentiellement utilisé dans des systèmes à deux positions stables, relais, sonnette, etc.

L'utilisation d'un électro-aimant en commande proportionnelle ne peut donc être envisagée que moyennant l'adjonction d'un capteur de position et l'asservissement en conséquence du courant d'excitation du bobinage de l'électro-aimant à la position de la partie mobile.

Cependant, l'ensemble ainsi obtenu, moyennant l'adjonction d'un capteur de position, est coûteux, encombrant et l'asservissement du courant d'excitation du bobinage de l'électro-aimant est délicat à réaliser, la variable asservie, intensité du courant d'excitation du bobinage, et la variable d'asservissement, signal de mesure délivrée par le capteur de position, n'étant pas fonctionnellement liées, ce qui nécessite un étalonnage et un réglage de l'asservissement pour chaque type d'appareillage correspondant.

Un tel dispositif du type moteur à réluctance variable a été décrit par le document EP-A-O 440 536 publié le 07/08/91, dans une application limitée à des dispositifs antivibratoires hydrauliques. Le caractère de linéarité de ce type de dispositif n'est toutefois pas suffisant en raison du fait que la variable asservie et la variable d'asservissement ne sont pas fonctionnellement liées.

La présente invention a pour objet de remédier aux inconvénients précités.

Elle a notamment pour objet un moteur ou transducteur linéaire asservi à réluctance variable de faible encombrement, très léger et à faible coût de mise en oeuvre.

Par moteur linéaire, on entend un moteur ou transducteur dont la partie mobile est soumise à une loi de déplacement, soit en rotation, soit en translation, sensiblement proportionnelle à un signal de consigne ou d'excitation.

Un autre objet de la présente invention est un moteur linéaire asservi à réluctance variable permettant d'engendrer des forces d'amplitude importante.

Un autre objet de la présente invention est également un moteur linéaire asservi présentant un réponse en fréquence semblable à celle des moteurs électrodynamiques de l'art antérieur.

Un autre objet de la présente invention est enfin un moteur linéaire asservi à réluctance variable dont les caractéristiques de linéarité du déplacement linéaire dépendent uniquement des tolérances des valeurs de caractéristique des composants utilisés dans la chaîne d'asservissement.

Le moteur linéaire asservi à réluctance variable, objet de la présente invention comporte un électro-aimant (1,9, 11;1,1',9,10,11,12) exerçant en fonctionnement une force d'attraction et comprenant une carcasse (1; 1,1') formant circuit magnétique (9;9,10) et un bobinage (11;11,12) autour d'un trajet de déplacement linéaire, une partie magnétique (17) mobile dans une direction de déplacement, guidée mécaniquement de façon à avoir un et un seul degré de liberté par rapport à la carcasse (1;1,1') de l'électro-aimant, la direction du déplacement étant sensiblement tangente à celle des lignes de champ magnétique créé par l'électro-aimant, des moyens (3;30) de mesure délivrant un signal (sd) représentatif du déplacement de la partie magnétique mobile (17) et connectés (F7) à un capteur muni de moyens inductifs ou capacitifs sensibles à la valeur de l'entrefer (18) existant entre la carcasse (1;1,1') et la partie mobile (17), des moyens (4) soustracteurs recevant sur une première entrée, positive, un signal (e) de commande de déplacement de la partie magnétique mobile (17), et, sur une deuxième entrée, négative, le signal représentatif du déplacement, ces moyens soustracteurs (4) délivrant un signal (ε) d'erreur de déplacement de la partie mobile (17) par rapport au signal de commande de déplacement, un circuit (CAC) amplificateur de courant recevant le signal d'erreur (ε) et délivrant un courant d'alimentation du bobinage (11;11,12) et des moyens de rappel (28;12) de la partie magnétique mobile (17) exerçant sur celle-ci une force de rappel opposée à la force exercée par l'électro-aimant. Il est caractérisé en ce que les moyens inductifs sensibles du capteur sont constitués par les bobinages (11;11,12) de l'électro-aimant et en ce que ses moyens capacitifs sensibles sont constitués par le condensateur formé par l'électro-aimant, l'entrefer (18) et la partie magnétique mobile (17).

Le moteur linéaire asservi à réluctance variable objet de la présente invention trouve application à la réalisation de transducteurs électro-mécaniques, notamment des générateurs de vibration servant à l'excitation des structures ou au contrôle actif des vibrations, notamment aussi des haut-parleurs asservis en fréquence de haute fidélité.

Son objet sera mieux compris à la lecture de la description et à l'observation des dessins ci-après dans lesquels :

- la figure 1 représente un schéma général du moteur linéaire asservi à réluctance variable, la partie mobile du moteur étant susceptible d'être soumise à un déplacement en translation,
- la figure 2 représente une variante de réalisation particulièrement avantageuse du moteur linéaire représenté en figure 1, dans laquelle une mesure différentielle du déplacement de la partie magnétique mobile est réalisée,
- la figure 3a représente une vue de dessus de la carcasse du moteur linéaire asservi à réluctance variable tel que représenté en figure 1 ou 2,
- la figure 3b représente une vue détaillée en coupe de la figure 3a selon un plan de symétrie longitudinale AA,
- la figure 3c représente un détail de réalisation de la figure 3b,
- la figure 3d représente une variante de réalisation de mesure inductive de la variation d'entrefer,
- la figure 4 représente un détail de réalisation d'un capteur différentiel de type capacitif plus particulièrement adapté à une utilisation dans le cas du mode de réalisation de la figure 2 ou 3b,
- la figure 5a représente un détail de réalisation d'un circuit de la figure 2,
- la figure 5b représente une variante de réalisation du circuit de la figure 5a dans le cas où un asservissement du flux du moteur est réalisé, en fonction de la commande de déplacement d'entrée, en lieu et place de l'asservissement du courant d'alimentation du bobinage du ou des électro-aimants constituant le moteur linéaire asservi à réluctance variable,
- la figure 5c représente une variante de réalisation du circuit de la figure 5a,
- la figure 6a représente un schéma général du moteur linéaire asservi à réluctance variable, la partie mobile du moteur étant susceptible d'être soumise à un déplacement en rotation,
- la figure 6b représente une variante de réalisation avantageuse du moteur linéaire.

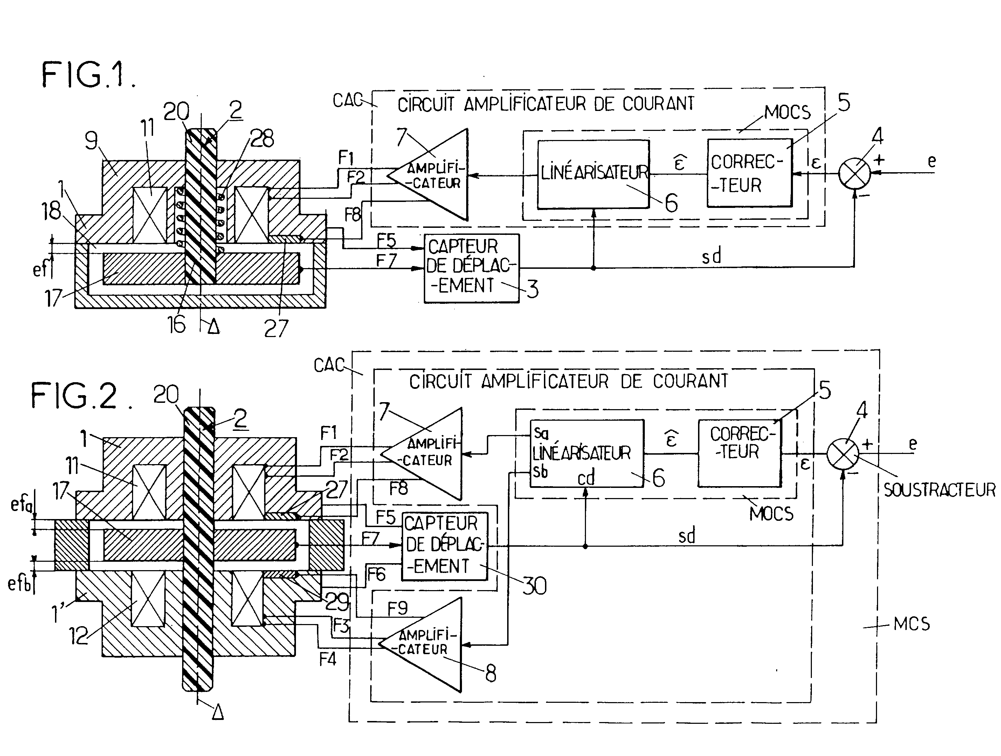

Le moteur linéaire asservi à réluctance variable, sera tout d'abord décrit en liaison avec la figure 1.

Selon la figure précitée, le moteur linéaire asservi à réluctance variable comprend au moins un électro-aimant exerçant, en fonctionnement, une force d'attraction, cet électro-aimant comprenant, ainsi que représenté sur la figure précitée, une carcasse 1 formant un circuit magnétique 9, et un bobinage torique 11 autour d'une direction $\Delta$ de déplacement linéaire.

En outre, une partie magnétique mobile 17, est prévue, cette partie magnétique étant généralement de même section que celle de l'électro-aimant.

Dans le mode de réalisation du moteur linéaire objet de l'invention dans lequel la partie magnétique mobile 17 est susceptible d'un déplacement en translation, cette dernière peut comporter un élément de guidage 2, formé par exemple par un index 20 de guidage de déplacement le long du trajet de déplacement matérialisé par la direction A de déplacement linéaire par rapport à la carcasse 1, ce déplacement étant engendré bien entendu sous l'effet de la force d'attraction exercée par l'électro-aimant. L'élément 2 de guidage peut être formé par tout moyen équivalent à l'index 20. De manière avantageuse, l'index 20 peut être monté sur une suspension à deux paliers déformables en élastomère ou en métal.

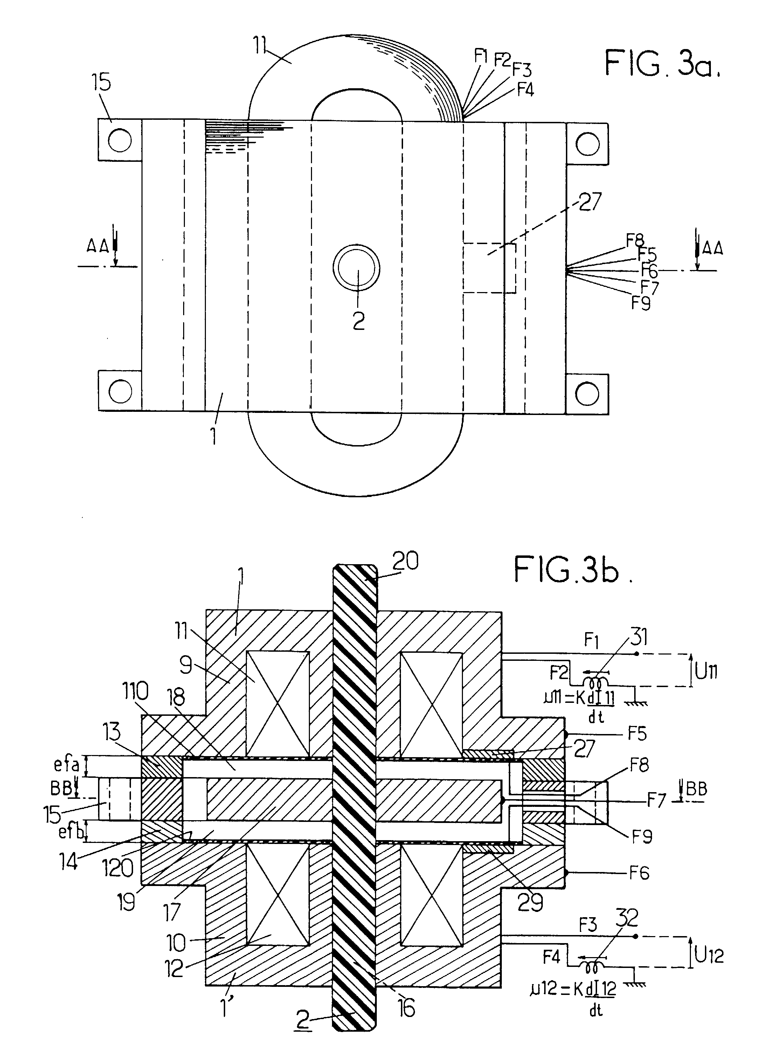

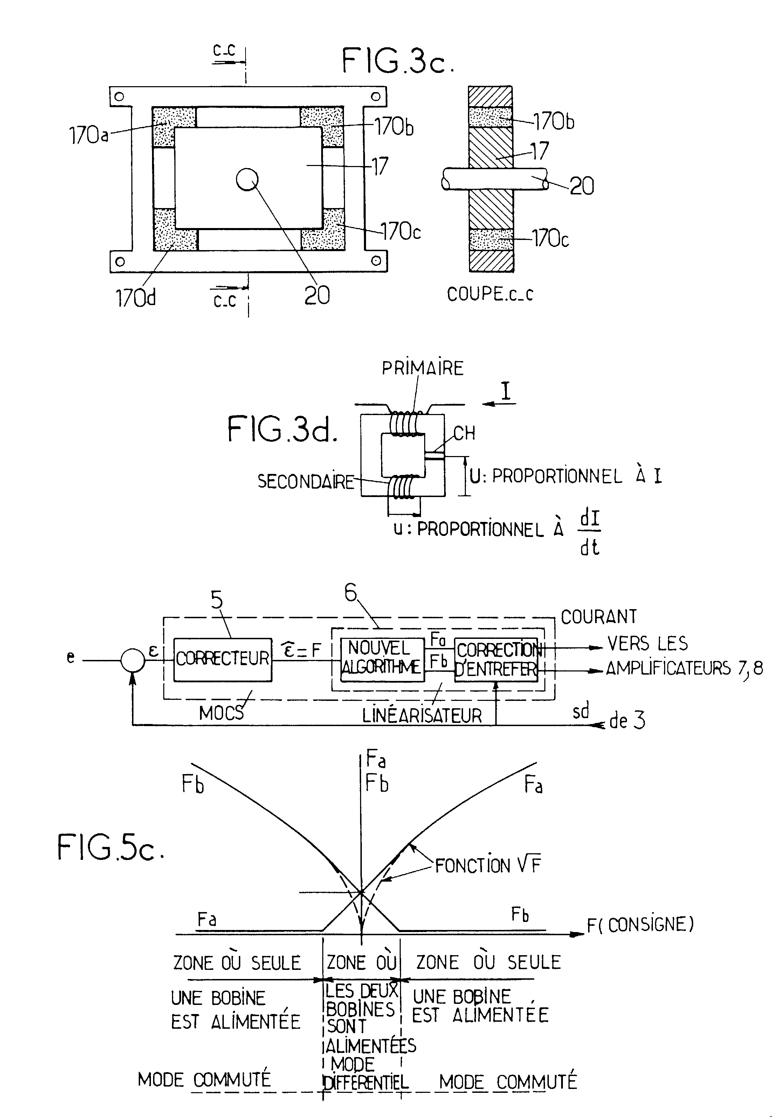

Les solutions décrites précédemment dans la description ne permettent pas de bloquer complètement la pièce mobile 17 afin d'inhiber tout mouvement de rotation autour de l'axe 20. Les pièces magnétiques n'étant pas de révolution, tout mouvement de rotation parasite est susceptible de provoquer un désalignement de celles-ci. Ce risque peut être éliminé en plaçant, ainsi que représenté en figure 3c, vue en coupe selon le plan de coupe BB de la figure 3b, des paliers en caoutchouc 170a, 170b, 170c, 170d. Ces paliers sont de préférence placés au niveau des coins de la pièce mobile 17 et permettent de caler celle-ci en supprimant son degré de liberté en rotation.

Enfin, lorsqu'une suspension à deux paliers est utilisée, l'un des paliers peut être constitué par les paliers de coin précités, l'autre palier, constitué par une membrane de haut-parleur, par exemple, pouvant être placé sur la charge.

Un circuit 3 détecteur du déplacement de la partie magnétique mobile 17 est prévu et délivre un signal, noté $\underline{sd}$, représentatif du déplacement de la partie magnétique mobile par rapport à la carcasse 1 de l'électro-aimant. Ce circuit détecteur 3 est formé par un capteur de mesure inductive ou capacitive de la valeur instantanée de l'entrefer 18, cette valeur étant notée ef sur la figure1, existant entre la carcasse 1 et la partie magnétique mobile 17 précédemment mentionnée.

Un élément soustracteur 4 est prévu et reçoit sur une première entrée, positive, un signal $\underline{e}$ de commande de déplacement de la partie magnétique mobile 17 et sur une deuxième entrée, négative, le signal représentatif du déplacement, $\underline{sd}$. L'élément 4 soustracteur délivre un signal d'erreur $\varepsilon$ de déplacement de la partie mobile 17 par rapport au signal de commande de déplacement.

Un circuit amplificateur de courant, CAC, reçoit le signal d'erreur $\varepsilon$ et délivre un courant d'alimentation au bobinage 11 de l'électro-aimant par des fils F1, F2.

Enfin, un élément de rappel, 28, est prévu afin d'assurer le rappel de la partie magnétique mobile 17 en exerçant sur celle-ci une force de rappel de sens opposé à celui de la force exercée par l'électro-aimant.

Le fonctionnement du moteur linéaire asservi à réluctance variable tel que représenté en figure 1 est le suivant :

lorsqu'on alimente le bobinage 11 de l'électro-aimant par un courant, une force d'attraction de l'électro-aimant ainsi alimenté s'exerce sur la partie 17 magnétique mobile en provoquant un déplacement par attraction de celle-ci vers la carcasse 1. L'élément de rappel 28, tel que représenté en figure 1 de manière non limitative par un élément mécanique, permet de maintenir en équilibre dynamique l'équipage constitué par la partie 17 magnétique mobile et l'index de guidage 20 le long de la direction de déplacement Δ. Le déplacement lui-même est contrôlé et la force exercée par l'électro-aimant est asservie en fonction du déplacement de la partie 17 magnétique mobile. Dans ce but, le circuit 3 détecteur de déplacement permet de mesurer ce déplacement de la partie 17 magnétique mobile, c'est-à-dire de la valeur instantanée de l'entrefer ef, selon une constante de proportionnalité à la valeur du signal e de commande de déplacement ; cette constante ne dépend que des paramètres du circuit d'asservissement, lequel sera décrit plus en détails ci-après dans la description.

Ainsi qu'on l'a représenté en figure 1 de manière non limitative, l'élément 28 de rappel peut être constitué par un élément mécanique tel qu'un ressort de rappel de type ressort hélicoïdal par exemple. Celui-ci est alors engagé sur l'index 20 de guidage de déplacement de la partie 17 magnétique mobile, ainsi que représenté sur la figure 1 précitée. L'ensemble formé par l'index 20 de guidage et le ressort 28 est alors monté à coulissement dans un logement 16 de la carcasse 1.

Le mode de réalisation de la figure 1 donne satisfaction du point de vue de son fonctionnement.

Toutefois, le moteur linéaire, tel que décrit précédemment, présente les limitations ci-après :

- relation non linéaire entre l'entrefer et la valeur de la capacité, laquelle se répercute dans la caractéristique tension/déplacement du capteur,
- absence de référence de position absolue,
- risque de dérive important, résultant des limitations précitées.

Un autre mode de réalisation du moteur linéaire à réluctance variable visant à supprimer les limitations précitées sera maintenant donné en liaison avec la figure 2.

Selon la figure 2 précitée, l'élément 12 de rappel est constitué par un contre électro-aimant semblable à l'électro-aimant. Sur la figure 2, l'électro-aimant est constitué par la carcasse 1 formant circuit magnétique 9, le bobinage 11 et la direction de déplacement Δ matérialisée par l'index de guidage 20, alors que le contre électro-aimant est formé par une deuxième carcasse 1', symétrique de la première carcasse 1, un deuxième bobinage semblable 12, le contre électro-aimant et l'électro-aimant étant disposés en vis-à-vis, de part et d'autre de la partie 17 magnétique mobile, ainsi que représenté sur la figure 2. Ainsi qu'on l'observera sur la figure 2 précitée, l'index 20 de guidage de la partie 17 magnétique mobile s'étend symétriquement par rapport à la partie 17 magnétique mobile et le guidage de la partie 17 magnétique mobile au cours du fonctionnement est simultanément assuré par la carcasse 1 de l'électro-aimant et par la carcasse 1' du contre électro-aimant.

En outre, un circuit de commande symétrique, noté MCS, de l'électro-aimant, respectivement du contre électro-aimant, permet de délivrer aux bobinages respectifs 11, 12, de ces derniers un courant d'alimentation en excitation symétrique, ainsi qu'il sera expliqué ci-après dans la description.

Une description plus détaillée de la partie mécanique du moteur linéaire asservi à réluctance variable sera maintenant donnée en liaison avec les figures 3a et 3b.

Sur la figure 3a, on a représenté une vue de dessus de la partie mécanique du moteur linéaire asservi.

Ainsi qu'on pourra l'observer sur la figure 3a précitée, le moteur comprend la carcasse 1 ou bâti, formée en fait de l'électro-aimant et du contre électro-aimant ainsi que précédemment mentionné.

De préférence, la carcasse 1 ainsi que la carcasse 1' du contre électro-aimant peuvent avantageusement être formées par un circuit magnétique 9, 10, ainsi que représenté sur la figure 3b, laquelle est une vue en coupe selon le plan de symétrie AA de la figure 3a.

Chaque circuit magnétique peut être avantageusement formé par un circuit magnétique en matériau ferromagnétique feuilleté ou fritté pour limiter les pertes magnétiques. Enfin, un bobinage électrique 11, respectivement 12, est prévu, pour former l'électro-aimant, respectivement le contre électro-aimant. Chaque bobinage est alors alimenté par deux fils d'alimentation, F1, F2, respectivement F3, F4. L'électro-aimant, respectivement le contre électro-aimant, sont maintenus à une distance fixe l'un de l'autre par des pièces mécaniques de liaison, notées 13, respectivement 14, la pièce 15 telle que représentée sur les figures 3a et 3b servant à la fixation de la carcasse, par exemple. On notera que l'équipage mobile est formé d'une tige formant index de guidage 20 et constituée en un matériau plastique, tel qu'un matériau plastique du type auto-lubrifiant. La tige 20 est enfichée dans la partie 17 magnétique mobile, elle-même formée par une plaque en matériau ferromagnétique fritté ou feuilleté afin de limiter les pertes magnétiques correspondantes. L'équipage constitué par la tige 20 formant index de guidage et par la partie 17 magnétique mobile est guidé en translation par l'index de guidage 20, lequel traverse la carcasse 1, 1' de l'électro-aimant, respectivement du contre électro-aimant. Les passages ménagés dans la carcasse précitée sont de préférence ajustés de façon à minimiser les frottements entre la tige proprement dite 20, et la paroi des orifices permettant le passage de celle-ci. La partie 17 magnétique mobile est ainsi maintenue parallèle à l'électro-aimant, respectivement au contre électro-aimant, par l'intermédiaire des passages ajustés précités, pendant ses déplacements au cours du fonctionnement du moteur linéaire asservi à réluctance variable. Un tel mode opératoire a pour effet de délimiter, en fait, au cours du fonctionnement, deux entrefers variables, 18 et 19, lesquels ont pour valeur, ainsi que représenté sur la figure 3b, efa, respectivement efb, avec efa + efb = constante.

Le mode opératoire du moteur linéaire asservi à réluctance variable tel que représenté en figure 2 et 3a, 3b est le suivant.

L'alimentation de l'un ou l'autre des bobinages 11 ou 12 par un courant d'alimentation délivré par les fils d'alimentation F1, F2, respectivement F3, F4, provoque une force d'attraction de l'électro-aimant, respectivement du contre électro-aimant, ainsi alimentés, sur la partie 17 magnétique mobile. Ainsi, le déplacement de celle-ci est assuré dans un sens ou dans l'autre. Pour que ce déplacement soit contrôlé, la force appliquée par l'électro-aimant, respectivement le contre électro-aimant, est asservie en fonction du déplacement de la partie 17 magnétique mobile.

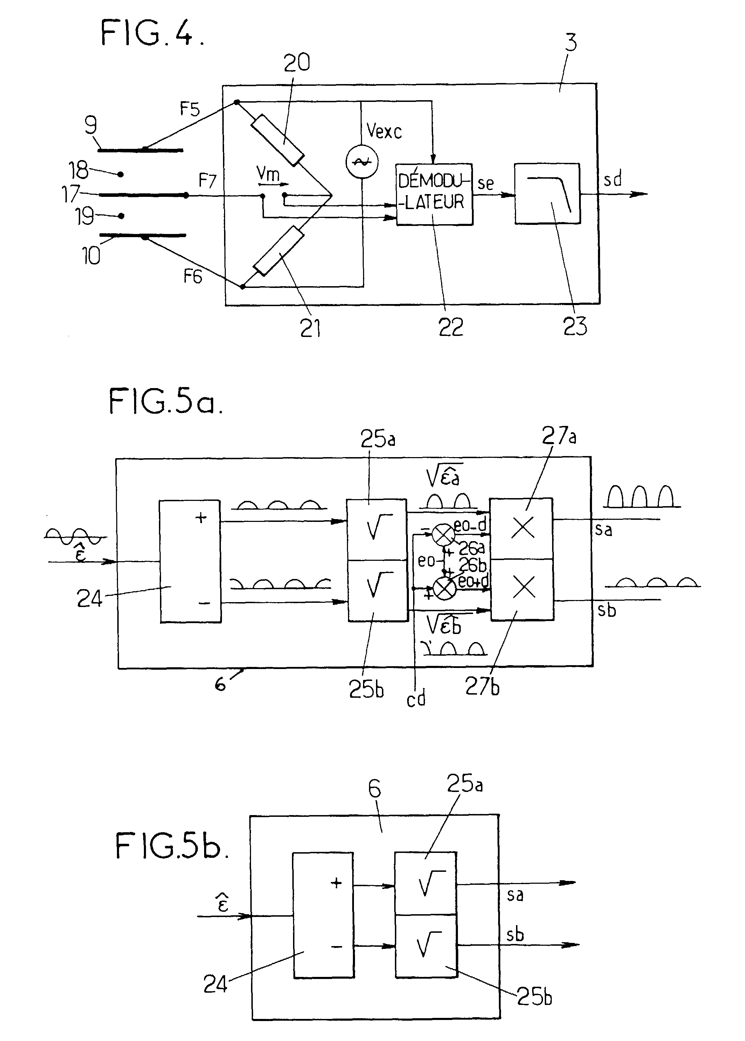

L'asservissement précité est réalisé au moyen d'un circuit détecteur du déplacement de la partie 17 magnétique mobile, lequel sera décrit en liaison avec les figures 4 et 5a, 5b ci-après.

D'une manière générale, le circuit de commande symétrique MCS comporte avantageusement un circuit 30 détecteur du déplacement différentiel de la partie 17 magnétique mobile, ce circuit détecteur 30 délivrant à la borne négative du soustracteur 4 un signal <u>sd</u> représentatif du déplacement différentiel de la partie magnétique mobile par rapport à la carcasse 1, 1', de l'électro-aimant et du contre électro-aimant par rapport à une position d'origine d'équilibre.

En outre, un circuit amplificateur de courant d'alimentation, noté CAC, en excitation symétrique, est d'alimentation, noté CAC, en excitation symétrique, est prévu, ce circuit comportant, d'une part, un module noté MOCS de commande symétrique recevant le signal d'erreur E délivré par le circuit soustracteur 4, et délivrant un premier et un deuxième signal de commande d'excitation symétrique, noté sa, sb. Le circuit amplificateur de courant d'alimentation en excitation symétrique, CAC, comporte, d'autre part, deux amplificateurs 7, 8 de courant recevant le premier respectivement le deuxième signal de commande d'excitation symétrique, et délivrant au bobinage de l'électro-aimant 11, respectivement du contre électro-aimant 12, un courant d'alimentation en excitation symétrique correspondant.

D'une manière générale, on notera que le principe de la mesure du déplacement de la partie 17 magnétique mobile consiste à mesurer une grandeur qui varie avec les entrefers 18 et 19 précédemment mentionnés, et en particulier les valeurs efa, efb, de ces derniers, ou mieux avec leur différence.

Selon un premier aspect particulièrement avantageux du moteur linéaire à réluctance variable objet de la présente invention, la mesure précitée peut être réalisée de manière inductive ou capacitive.

La méthode inductive consiste à mesurer l'inductance des deux bobinages 11 et 12, en fonction des valeurs d'entrefer correspondantes.

L'inductance précitée a pour valeur :

$$L = \frac{\mu 0 S . N^2}{2ef}$$

relation dans laquelle

μ0  est la perméabilité dans l'entrefer,
S   est la surface de fer de l'électro-aimant,
N   est le nombre de spires du bobinage,
ef  est la longueur de l'entrefer, c'est-à-dire la valeur efa ou efb instantanée pour chaque entrefer considéré.

La valeur des inductances précitées peut alors être calculée facilement en mesurant, d'une part, la tension aux bornes de chaque bobinage, et la dérivée du courant d'alimentation de ces derniers, la valeur de la dérivée de ce courant pouvant être mesurée à partir d'un bobinage auxiliaire de faible valeur connue, la tension instantanée aux bornes de ce bobinage auxiliaire représentant la valeur de la dérivée du courant d'alimentation du bobinage considéré.

Sur la figure 3b, on a représenté les bobinages auxiliaires 31 et 32 associées au bobinage 11, respectivement 12, chacun délivrant respectivement une tension :

$$u11 = K \frac{dI11}{dt}$$

$$u12 = K \frac{dI12}{dt.}$$

Une mesure de la tension U11, respectivement U12, appliquée au bobinage 11, respectivement 12, de l'électro-aimant et du contre électro-aimant et la mesure des tensions aux bornes des bobinages auxiliaires 31 et 32, u11, u12, permet alors de déterminer les valeurs correspondantes de L inductance de l'électro-aimant, respectivement du contre électro-aimant, et en définitive, les valeurs d'entrefer efa, efb correspondantes. On notera en particulier que les valeurs de tension précitées peuvent être mesurées par échantillonnage, conversion analogique-numérique, le calcul pouvant alors ensuite être réalisé de façon numérique par exemple.

Une solution plus avantageuse peut consister à utiliser un transformateur d'isolement, alimenté au primaire par le courant I, lequel permet en outre d'adapter le niveau du signal mesuré. De manière classique, ainsi que représenté en figure 3d, la tension $\vec{u}$ délivrée par le secondaire du transformateur d'isolement est ainsi proportionnelle à $\frac{dI}{dt}$ et à ef.

En outre, grâce au transformateur d'isolement, il est possible de mesurer le courant I circulant dans les électro-aimants. La connaissance de la valeur de ce courant est nécessaire lorsque les amplificateurs 7 et 8 sont asservis en courant. Dans ce but, un capteur à effet Hall CM est placé dans le circuit magnétique du transformateur d'isolement, lequel délivre une tension U proportionnelle à I. Ce type de capteur est facile à mettre en oeuvre.

Toutefois, une mesure capacitive de la valeur de l'entrefer, ou une mesure différentielle de celui-ci, est technologiquement plus simple à mettre en oeuvre. Une telle mesure consiste à mesurer en fait la capacité qui existe entre l'électro-aimant et la partie 17 magnétique mobile, c'est-à-dire entre deux surfaces conductrices séparées par un entrefer de faible dimension et constituant donc un condensateur dont la capacité C dépend fortement de la valeur de l'entrefer. Cette valeur est donnée par la relation bien connue :

$$C = \frac{\varepsilon 0 S}{ef}$$

où

| | |
|---|---|
| $\varepsilon 0$ | est la permittivité dans l'entrefer, le diélectrique étant de l'air, |
| S | est la surface conductrice de l'électro-aimant, |
| ef | est la valeur de l'entrefer, c'est-à-dire la valeur efa ou efb, lorsque l'on considère l'électro-aimant ou le contre électro-aimant. |

Bien entendu, la valeur de cette capacité peut être mesurée selon toute manière connue. Cependant, dans le cas où le moteur est symétrique, ainsi que dans le mode de réalisation de la figure 2 et 3b, une méthode différentielle apparaît la plus adaptée.

Dans un tel cas, le circuit capteur 3 peut avantageusement être réalisé sous forme du circuit 30 détecteur de déplacement différentiel, tel que représenté en figure 2 et 4.

L'électro-aimant et le contre électro-aimant, la partie 17 magnétique mobile, et les 2 entrefers 18 et 19 constituent alors un double condensateur, lequel, ainsi que représenté en figure 4, est relié par des fils de connexion F5, F6 et F7, à un pont de mesure comprenant des résistances égales 20 et 21. Ces résistances peuvent être constituées par des résistances de précision.

Ainsi qu'on le reconnaîtra sur la figure 4 précitée, le circuit en pont de mesure comporte avantageusement deux premières branches adjacentes formées par les capacités des entrefers 18, 19 précités, constitués par la carcasse 1 de l'électro-aimant et la première face de la partie 17 magnétique mobile en vis-à-vis, respectivement par la carcasse 1' du contre électro- aimant, et la deuxième face de la partie 17 magnétique mobile en vis-à-vis. Le circuit de mesure en pont comprend deux deuxièmes branches adjacentes formées par les résistances, 20 et 21.

En outre, une première diagonale du circuit de mesure en pont est formée par un générateur 220 de signaux périodiques dont la fréquence fondamentale est très supérieure à la fréquence de coupure du moteur linéaire asservi. a titre d'exemple non limitatif, pour un moteur linéaire asservi dont la fréquence de coupure est par exemple 2 kHz, la fréquence fondamentale du signal délivré par le générateur 220 pourra être choisie égale à 50 kHz.

La deuxième diagonale du pont de mesure délivre un signal différentiel de mesure, noté $\underline{vm}$, entre la partie 17 magnétique mobile et le point commun des deux deuxièmes branches adjacentes formées par les résistances étalon 20 et 21.

Un circuit démodulateur 22 reçoit, d'une part, le signal différentiel de mesure, vm, et d'autre part, les signaux périodiques d'excitation, délivrés par le générateur 220, afin d'assurer une démodulation du signal différentiel de mesure, le circuit démodulateur délivrant ainsi de manière classique le signal enveloppe d'amplitude du signal différentiel de mesure vm. Ce signal est noté se sur la figure 4.

Enfin, un circuit de filtrage 23 de type filtre passebas est prévu, ce circuit recevant le signal enveloppe se, et délivrant le signal sd représentatif du déplacement différentiel de la partie magnétique mobile 17.

Ce filtre supprime les produits de démodulation à haute fréquence.

Le fonctionnement du circuit tel que représenté en figure 4 est le suivant : le signal de mesure vm délivré en sortie du pont de mesure est un signal alternatif de même fréquence que la tension d'excitation délivrée par le générateur 220. Ce signal de mesure vérifie la relation :

$$vm = \frac{vexc.d}{2.e0}$$

relation dans laquelle :

| | |
|---|---|
| vexc | est la valeur de la tension alternative d'excitation, |
| d | est le déplacement de la partie 17 magnétique mobile par rapport au milieu du dispositif, la valeur d étant nulle lorsque efa = efb, |
| e0 | est la valeur des entrefers quand la partie 17 magnétique mobile est en position médiane, c'est-à-dire efa = efb = e0. |

Les avantages de la méthode de mesure différentielle apparaissent alors immédiatement :

- la valeur du signal de mesure vm est linéaire, c'est-à-dire qu'elle est proportionnelle au déplacement d, ce qui n'était pas le cas pour les méthodes précédentes ;
- elle est absolue car la tension mesurée vaut 0 quand la partie 17 magnétique mobile est en position médiane, ce qui là encore n'était pas le cas dans les méthodes précédentes;

- les dérives sont minimisées car la symétrie est préservée et donc elles se compensent automatiquement.

Ainsi qu'on le notera également vis-à-vis des dispositifs de l'art antérieur, le dispositif détecteur utilisé tel que décrit en liaison avec les figures 3b et 4, par exemple, n'est plus un élément distinct, coûteux et encombrant, qu'il est nécessaire d'ajouter.

En effet, il suffit de brancher les fils correspondants tels que représentés en figures 3b et 4, les fils F5, F6 et F7, sur les pièces correspondantes existantes. La seule contrainte minime à observer est l'exigence, pour réaliser la mesure par la méthode capacitive, selon laquelle les diverses pièces doivent être électriquement isolées les unes des autres. C'est-à-dire que la tige 20 constituant l'index de guidage doit être réalisée en un matériau isolant, en matériau plastique auto-lubrifiant par exemple, ainsi que les pièces de liaison précédemment mentionnées.

Les pièces isolantes peuvent en outre être en céramique, ce qui permet d'obtenir une plus grande rigidité.

Afin d'obtenir une meilleure précision de mesure et de détection capacitive, les parties des carcasses 1 et 1' en vis-en-vis de la première, respectivement deuxième face de la partie 17 magnétique mobile peuvent avantageusement être munies, ainsi que représenté en figure 3b, d'un revêtement électriquement conducteur 110, 120. Le revêtement électriquement conducteur peut avantageusement être formé par un film plastique métallisé, dont la métallisation est électriquement reliée ou non au potentiel de chaque carcasse 1 ou 1' correspondante. Un tel revêtement 110, 120, permet d'améliorer l'assimilation des caractéristiques de chaque condensateur formé par les entrefers efa, efb, à celles d'un condensateur plan, et donc la précision de la mesure.

Toutefois, les électrodes formées par le revêtement 110, 120, sont perturbées par couplage capacitif aux bobines 11 et 12, dont le potentiel est variable. Le niveau de bruit du capteur ainsi formé peut être supprimé ou fortement réduit en recouvrant chaque bobine d'une plaque de blindage reliée au potentiel de référence. La plaque de blindage, recouvrant la bobine, présente une coupure de façon que cette plaque ne puisse constituer une spire entourant complètement une zone soumise à un flux magnétique variable.

En outre, afin d'éviter l'apparition de courants de Foucault importants dans les électrodes 110 ou 120, celles-ci pourront avantageusement être configurées selon une structure divisée, en l'absence de boucle, telle qu'une structure en peigne. La plaque de blindage et l'électrode divisée peuvent alors être réalisées selon les techniques des circuits imprimés souples, double face, la face comportant la plaque de blindage étant appliquée sur la bobine correspondante.

La démodulation effectuée par le démodulateur 22 permet d'obtenir une tension de sortie continue grâce à la démodulation effectuée par la fréquence du signal d'excitation délivrée par le générateur 220, puis au filtrage de type passe-bas par le filtre 23. Le signal sd délivré en sortie du filtre passe-bas 23 et en sortie du circuit détecteur 3 ou 30 est alors proportionnel au déplacement d de la partie 17 magnétique mobile.

Bien entendu, le circuit soustracteur 4 effectue alors la différence entre le signal sd, représentatif du déplacement de la partie 17 magnétique mobile, et le signal de commande e de déplacement, lequel représente bien entendu la consigne de déplacement pour l'équipage constitué par la partie magnétique mobile 17 et par l'index 20. Le signal de sortie $\varepsilon$ ou signal d'erreur délivré par le soustracteur 4 représente l'erreur entre la position réelle et la position demandée pour l'équipage précédemment cité. On notera que le circuit soustracteur 4 peut avantageusement être réalisé au moyen d'un amplificateur opérationnel monté en amplificateur différentiel.

Un mode de réalisation avantageux non limitatif du module MOCS de commande symétrique linéaire sera donné en relation avec les figures 2 et 5a, puis 5b.

D'une manière générale, on comprendra que le module MOCS de commande symétrique linéaire comprend avantageusement un circuit 5 correcteur d'asservissement, permettant d'assurer la stabilité de l'asservissement en fonction de l'impédance mécanique ou charge à laquelle le moteur, objet de la présente invention, est relié. Ce circuit reçoit le signal d'erreur $\varepsilon$ délivré par le circuit soustracteur 4 et délivre un signal d'erreur corrigé $\hat{\varepsilon}$. Le circuit 5 correcteur d'asservissement ne sera pas décrit car Il correspond à un circuit de type classique dans le domaine des moteurs asservis, ce type de circuit étant destiné avant tout à améliorer les performances de l'asservissement en termes de temps de réponse et d'amortissement.

Enfin, le module MOCS de commande symétrique linéaire comprend en outre un circuit 6 linéarisateur permettant d'assurer une commande des bobinages 11, 12, de l'électro-aimant, respectivement du contre électro-aimant, en asservissement du courant ou du flux magnétique parcourant ces électro-aimants, de façon à rendre le déplacement de la partie 17 magnétique mobile et de l'index 2 linéaire selon la direction de déplacement $\Delta$ par rapport au signal de commande d'entrée e.

Un premier mode de réalisation du circuit 6 linéarisateur sera décrit en liaison avec la figure 5a.

Dans ce cas, lorsqu'un asservissement en courant doit être réalisé, c'est-à-dire un asservissement du courant parcourant le bobinage 11 de l'électro-aimant, respectivement le bobinage 12 du contre électro-aimant en fonction du signal de commande d'entrée e, le circuit linéarisateur 6 comprend avantageusement un circuit 24 redresseur-séparateur délivrant à partir du signal

d'erreur corrigé $\hat{\varepsilon}$, délivré par le circuit 5 correcteur d'asservissement, les alternances positives, respectivement négatives, redressées du signal d'erreur corrigé $\hat{\varepsilon}$.

On notera que d'une manière générale, le circuit 24 délivre en fait les valeurs positives, respectivement négatives, redressées, du signal d'erreur corrigé $\hat{\varepsilon}$, celui-ci étant présumé correspondre à un signal d'entrée alternatif e pour lequel le signal d'erreur E et le signal d'erreur corrigé $\hat{\varepsilon}$ sont eux-mêmes formés par un signal à alternance positive et négative.

A titre d'exemple non limitatif, le circuit 24 redresseur séparateur pourra être constitué par deux circuits d'alignement des alternances de type classique, un premier circuit permettant d'aligner les alternances positives à partir de la valeur 0, et un deuxième circuit, semblable au premier, permettant d'aligner les alternances négatives sur la valeur 0. Ce type de circuit classique ne sera pas décrit car parfaitement connu de l'homme de métier.

En outre, ainsi que représenté en figure 5a, le circuit linéarisateur 6 peut comprendre avantageusement un premier, 25a, et un deuxième, 25b, circuit de calcul de la racine carrée de l'amplitude des alternances positives, respectivement négatives, redressées du signal d'erreur corrigé $\hat{\varepsilon}$. Les circuits 25a et 25b précités peuvent, être réalisés par des circuits analogiques et délivrent des signaux proportionnels, respectivement à $\sqrt{\hat{\varepsilon}a}$ et $\sqrt{\hat{\varepsilon}b}$.

Enfin, le circuit linéarisateur 6 comprend un premier, 27a, et un deuxième, 27b, circuit multiplicateur de correction recevant respectivement les signaux $\sqrt{\hat{\varepsilon}a}$, respectivement $\sqrt{\hat{\varepsilon}b}$, délivrés par les circuits de calcul 25a, 25b. Un circuit soustracteur 26a et un circuit sommateur 26b reçoivent, d'une part, le signal de détection différentielle sd, proportionnel à d, déplacement de la partie 17 magnétique mobile, et, d'autre part, un signal représentatif de la valeur eo des entrefers lorsque la partie magnétique mobile 17 est en position médiane et délivrent des signaux représentatifs des valeurs eo-d, eo+d au premier, 27a, respectivement deuxième, 27b, circuit de correction.

Ces circuits 27a et 27b délivrent un premier, sa, respectivement un deuxième, sb, signal de commande symétrique au premier, 7, respectivement deuxième, 8, amplificateur de courant.

Le circuit linéarisateur 6, tel que représenté en figure 5a, permet d'assurer une linéarisation de la caractéristique non linéaire des électro-aimants, en ce qui concerne l'expression de la force que ces derniers produisent en fonction de l'intensité parcourant les bobinages correspondants.

En effet, la force produite par l'électro-aimant, respectivement le contre électro-aimant, vérifie la relation :

$$F = \frac{\mu 0 S (NI)^2}{4.ef^2}$$

relation dans laquelle

$\mu 0$    est la perméabilité de l'entrefer,

$S$    est la surface fer de l'électro-aimant considéré,

$N$    est le nombre de spires du bobinage de l'électro-aimant,

$I$    est le courant circulant dans le bobinage de l'électro-aimant,

ef est la valeur de l'entrefer, soit efa, soit efb.

La force précitée varie donc comme le carré du courant et comme l'inverse du carré de la valeur de l'entrefer.

Le signal de commande $\hat{\varepsilon}$ du linéarisateur 6 représente la consigne de force. Celle-ci est, en premier lieu, séparée en sa partie positive et en sa partie négative par le circuit 24 décrit précédemment en raison du fait qu'un électro-aimant ne peut produire que des forces attractives. Suivant le signe de la force à produire, il est nécessaire d'alimenter l'un ou l'autre des bobinages de l'électro-aimant, respectivement du contre électro-aimant. Le circuit 25a ou 25b permet de calculer la racine carrée du signal, et le circuit 27a ou 27b multiplie le résultat par une tension représentative de la valeur instantanée de l'entrefer, c'est-à-dire proportionnelle à e0+d ou à eO-d, suivant la valeur efa, efb de l'entrefer 18 ou 19 considéré.

De cette manière, lorsque l'entrée de consigne de force est $\hat{\varepsilon}$, positive, la sortie du circuit 25a est égale à $\sqrt{\hat{\varepsilon}}$, et celle du circuit 27a est égale à efa. $\sqrt{\hat{\varepsilon}}$. L'amplificateur de courant 7 traduit la valeur de cette consigne en un courant I proportionnel à efa. $\sqrt{\hat{\varepsilon}}$. Puisque la force délivrée par le bobinage 11 est proportionnelle à

$$\left(\frac{I}{efa}\right)^2$$

et que le courant I est proportionnel à efa.$\sqrt{\hat{\varepsilon}}$, la force résultante est donc proportionnelle à

$$\left(\frac{efa.\sqrt{\hat{\varepsilon}}}{efa}\right)^2$$

soit finalement à $\hat{\varepsilon}$.

On obtient bien de cette façon une force proportionnelle à la valeur de consigne $\hat{\varepsilon}$.

Cependant, l'asservissement peut être rendu plus performant par l'asservissement du flux magnétique dans l'électro-aimant et le contre électro-aimant à la valeur du signal de consigne de commande de déplacement e et non plus en asservissant le courant.

Dans ce but, la carcasse 1 de l'électro-aimant et la carcasse 1' du contre électro-aimant comportent avantageusement au niveau de l'entrefer 18, 19 une sonde de mesure à effet Hall 27,29, ainsi que représenté par exemple en figure 3b. La sonde de mesure à effet Hall 27,29 délivre, par l'intermédiaire de fils de connexion F8, F9, un signal représentatif du flux magnétique engendré dans l'entrefer 18, 19 correspondant, à l'amplificateur de courant 7, respectivement 8, tel que représenté en figure 2. Ainsi, le flux magnétique dans l'entrefer est proportionnel à l'entrée de consigne des amplificateurs de courant 7 et 8.

La force engendrée par l'électro-aimant, respectivement le contre électro-aimant, vérifie la relation :

$$F = \frac{B^2.S}{\mu 0}$$

relation dans laquelle

B      est le flux magnétique dans l'entrefer,
S      est la surface de fer de l'électro-aimant ou du contre électro-aimant,
$\mu 0$      est la perméabilité dans l'entrefer.

On notera que dans un tel cas, le processus de linéarisation est simplifié, puisque l'expression de la force exercée par l'électro-aimant, respectivement le contre électro-aimant, ne varie plus avec la valeur de l'entrefer.

Dans ce cas, ainsi que représenté en figure 5b, le circuit linéarisateur est simplifié et comprend, un circuit 24 redresseur-séparateur délivrant, à partir du signal d'erreur corrigé $\hat{\varepsilon}$ délivré par le circuit 5 correcteur d'asservissement, les alternances positives, respectivement négatives, redressées du signal d'erreur corrigé $\hat{\varepsilon}$ tel que décrit précédemment en liaison avec la figure 5a suivi d'un premier, 25a, et d'un deuxième, 25b, circuit de calcul de la racine carrée de l'amplitude des alternances positives, respectivement négatives, redressées du signal d'erreur corrigé $\hat{\varepsilon}$. Chaque circuit de calcul 25a, 25b, délivre un signal proportionnel, respectivement à $\sqrt{\hat{\varepsilon}a}$, $\sqrt{\hat{\varepsilon}b}$, constituant respectivement les signaux de commande différentielle, sa, sb. Ainsi, le linéarisateur 6 ne contient que les deux premiers étages du linéarisateur représenté en figure 5a.

Dans une variante de réalisation, la correction de la non linéarité due à la dépendance de la force, exercée par l'électro-aimant respectivement le contre électro-aimant, en raison du carré du courant parcourant leur bobine respective ou du flux magnétique ainsi créé, est obtenue par l'introduction dans la boucle de retour de l'asservissement, c'est-à-dire au niveau des fils de connexion F8, F9, des sondes à effet Hall aux amplificateurs 7, respectivement 8, d'un circuit opérateur de fonction carré, délivrant au bobinage 11, 12, de l'électro-aimant respectivement du contre-électro aimant un signal proportionnel au carré du flux magnétique engendré dans chaque entrefer correspondant 18, 19 (le circuit linéarisateur 6 de la figure 5b comporte alors le seul circuit 24 redresseur-séparateur décrit précédemment en liaison avec la figure 5a). Une telle variante de réalisation ne sera pas décrite plus en détail car elle constitue un équivalent au mode de réalisation de la figure 5b.

On notera que la réalisation pratique du circuit correcteur d'asservissement 5 et du circuit linéarisateur 6 peut être, soit analogique, soit numérique.

En version numérique, ces circuits pourront être réalisés avantageusement au moyen d'un processeur rapide de signaux tel que le processeur commercialisé sous la référence TMS 320 C 25 par la société TEXAS INSTRUMENTS.

En version de réalisation analogique, le circuit correcteur d'asservissement 5 est réalisé au moyen d'amplificateurs opérationnels et le circuit linéarisateur 6 peut être réalisé à partir de multiplieurs analogiques tel que le circuit commercialisé sous la référence AD 534 par la société ANALOG DEVICES, ces circuits permettant de réaliser les opérations de racine carrée et de multiplication.

En ce qui concerne l'installation des capteurs à effet Hall, ceux ci peuvent être réalisés au moyen de capteurs commercialisés par la société SPRAGUE sous la référence UGN 3503 U.

Les capteurs à effet Hall précités peuvent être placés soit dans l'entrefer, soit, plus avantageusement, dans le circuit magnétique ou dans une dérivation de ce dernier, de façon à délivrer un signal représentatif du flux engendré dans l'entrefer. Une description d'une variante de réalisation du linéarisateur décrit précédemment en liaison avec les figures 2 et 5b sera maintenant donnée en liaison avec la figure 5c, dans le cadre d'une commande numérique, par principe plus précise qu'une commande analogique.

Le linéarisateur décrit précédemment dans la description n'alimente qu'une bobine 11 ou 12 à la fois. Il est donc susceptible d'engendrer une distorsion à l'instant de passage par la valeur zéro de la force appliquée. Les bobines utilisées présentent par principe une forte impédance aux transitoires de courant, si bien que le courant, dans la bobine soumise à excitation, n'a pas le temps de s'établir lorsque le courant dans la bobine commutée à l'arrêt devient nul. Il en résulte une perturbation correspondante de la force produite. Selon le mode de réalisation correspondant, la commande numérique permet d'utiliser des lois ou processus de linéarisation beaucoup plus fines que le simple calcul de la racine carrée précédemment décrite.

Selon un aspect particulièrement avantageux, le processus de linéarisation peut consister à alimenter chaque bobine 11, 12, avec un courant de même intensité $I_o$ lorsque la force demandée est nulle. Ainsi, les forces produites par chaque bobine 11, 12, sur la pièce mobile 17 se compensent.

Pour de petites valeurs de la force demandée, le linéarisateur 6 est commandé en mode différentiel, le courant dans l'une des bobines est augmenté à une valeur $I_o+i$, celui dans l'autre bobine est diminué à la valeur symétrique $I_o-i$.

Pour des fortes valeurs de la force demandée, c'est-à-dire lorsque la valeur différentielle i atteint la valeur $I_o$, le courant dans la bobine correspondante devient nul et celui dans l'autre bobine atteint puis dépasse 2 $I_o$, et peut alors être déterminé selon la loi de la racine carrée, puisque l'on revient au cas précédemment décrit dans la description où seule l'une des bobines 11, 12 est alimentée.

Les compensations d'entrefer sont réalisées de la même façon que décrit précédemment.

En outre, dans le cas d'un asservissement du flux, et non plus d'un asservissement en courant, les considérations précédentes restent valables, la correction d'entrefer étant toutefois supprimée. Un exemple de circuit d'asservissement correspondant est donné ci-après en liaison avec la figure 5c. On comprend par exemple que les circuits correcteurs 5, et linéarisateur 6, avec le cas échéant la correction d'entrefer 60, peuvent être réalisés par un processeur numérique programmé de façon à délivrer les consignes de flux magnétique Fa et Fb telles que représentées en figure 5c, pour une consigne de force F donnée suite au traitement du module de correction, dans les conditions d'alimentation différentielle ou exclusive des deux respectivement d'une seule bobine 11, 12.

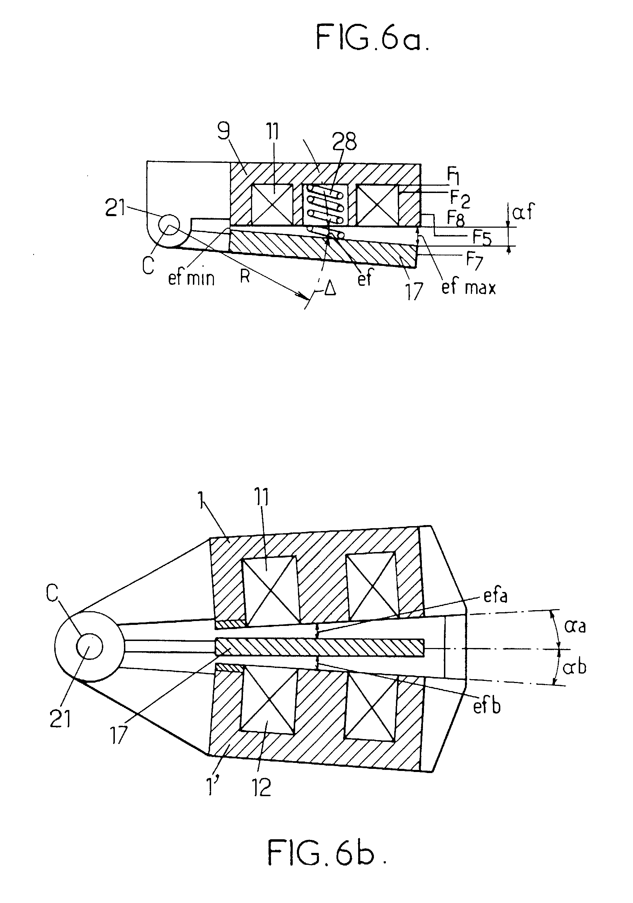

Une variante de réalisation d'un moteur linéaire sera décrite en liaison avec les figures 6a et 6b dans le cas où la partie magnétique mobile 17 est susceptible d'être soumise à un déplacement en rotation, autour d'un centre de rotation C. Dans les figures 6a et 6b, les mêmes références numériques désignent les mêmes éléments que dans les figures antérieures.

Ainsi qu'il apparaît à l'observation de la figure 6a, le bobinage 11 est placé autour du trajet de déplacement linéaire Δ, lequel correspond à un déplacement en rotation sur un arc de cercle d'angle d'ouverture αf.

La partie magnétique mobile 17 est mobile en rotation, dans la direction de déplacement Δ, et guidée mécaniquement de façon à avoir un seul degré de liberté par rapport à la carcasse 1 de l'électro-aimant. La direction de déplacement Δ est alors sensiblement tangente à celle des lignes du champ magnétique créé par l'électro-aimant 11 dans l'entrefer. La partie magnétique mobile 17 est soumise à un déplacement en rotation par rapport à un centre de rotation C et est montée à rotation par rapport à un axe de rotation 21 mécaniquement solidaire de la carcasse 1 et orthogonal au trajet de déplacement Δ.

Avec la figure 6b, on a représenté une variante de réalisation comportant de manière analogue à la figure 2 un aimant 11 et un contre-aimant 12.

On comprendra bien sûr, tant dans le cas de la figure 6a que dans celui de la figure 6b, que le caractère linéaire du déplacement s'entend de celui de l'angle instantané de rotation de la partie magnétique mobile 17, pourvu que celui-ci soit suffisamment faible. Les valeurs d'entrefer ef et efa, efb peuvent alors être assimilées aux valeurs d'angle instantané correspondantes αf, et αa, αb soit ef = R.αf, efa = R.αa et efb = R.αb. Une telle condition est réalisée lorsque pour un angle af donné, sin α = αf. Les paramètres géométriques du moteur objet de l'invention définissent alors un taux de distorsion d'entrefer de la forme :

$$\frac{ef.max}{ef.min} = 1 + 2\frac{l}{R}$$

avec 1 ≤ R où

ef.max désigne la valeur d'entrefer en extrémité distale de la partie magnétique mobile,

ef.min désigne la valeur d'entrefer en extrémité proximale de la partie magnétique mobile, extrémité proche du centre de rotation C,

R désigne le rayon de courbure du trajet de déplacement du centre de gravité de la partie magnétique mobile,

1 désigne la dimension de demi-ouverture de l'électro-aimant respectivement du contre électro-aimant, ou demi-longueur de la partie magnétique mobile 17.

Pour un mode de réalisation pratique, on prendra un angle de débattement $αf_M$ ou $αa_M$, $αb_M$, de la partie magnétique mobile inférieur ou égal à 10 degrés.

Le moteur linéaire à réluctance variable objet de la présente invention tel que représenté en figures 6a ou 6b, dans sa version de déplacement en rotation peut être utilisé dans tous les cas où l'on a à contrôler de façon précise des mouvements de rotation oscillants de faible amplitude à fréquence élevée, par exemple pour le contrôle actif des pulsations de pression dans les écoulements à l'aide d'un papillon oscillant monté à rotation dans une tubulure.

On a ainsi décrit un moteur linéaire asservi à réluctance variable particulièrement performant dans la mesure où, sous un faible volume, un faible encombrement, et un faible poids, ce type de moteur permet, d'une première part, d'exercer des forces importantes, ce type de moteur pouvant ainsi être utilisé pour assurer la réduction ou la suppression des vibrations de machines ou de moteurs ainsi qu'il avait été décrit dans la demande de brevet européen 0 040 536, A1, déposée au nom de la demanderesse sous priorité du 30 janvier 1990.

En outre, le moteur linéaire asservi à réluctance variable objet de la présente invention est, d'une deuxième part, particulièrement avantageux dans la mesure où une linéarité de déplacement de l'équipage mobile, dépendant uniquement des performances des composants électroniques constitutifs de la chaîne d'asservissement, peut être obtenue, le défaut de linéarité de l'ensemble du système pouvant alors être rendu égal à une valeur de l'ordre de 0,1%.

Une telle particularité, assortie à celle selon laquelle la mesure du déplacement peut être effectuée par rapport à une valeur de référence d'origine, valeur de zéro en l'absence de toute dérive de cette valeur de zéro, permet d'envisager les applications les plus diverses en matière de correction de position ou de correction d'assiette de structures mécaniques importantes.

En dernier lieu, la caractéristique de linéarité de la réponse du moteur linéaire asservi, objet de la présente invention, associée à la valeur de la largeur de bande ou de la fréquence de coupure de celui-ci permet d'envisager les applications correspondantes en matière de reproduction sonore, le moteur linéaire asservi à réluctance variable objet de la présente invention jouant alors le rôle d'un transducteur comparable, et en tout cas supérieur, au moteur électrodynamique de type classique, la contrainte relative à l'impédance mécanique de la membrane associée dans une telle application à l'équipage mobile, et en particulier à l'index de guidage 20 du moteur linéaire pour constituer par exemple un haut-parleur, pouvant être rendu aussi faible que possible, ou en tout cas compensée de manière totale par le circuit correcteur d'asservissement 5 et par le circuit linéarisateur pour assurer une reproduction fidèle du signal de commande et la traduction de celui-ci sous forme de vibrations sonores correspondantes.

**Revendications**

1. Moteur linéaire asservi à réluctance variable, comportant un électro-aimant (1,9,11;1,1',9,10,11, 12) exerçant en fonctionnement une force d'attraction et comprenant une carcasse (1;1,1') formant circuit magnétique (9;9,10) et un bobinage (11;11,12) autour d'un trajet de déplacement linéaire, une partie magnétique (17) mobile dans une direction de déplacement, guidée mécaniquement de façon à avoir un et un seul degré de liberté par rapport à la carcasse (1;1,1') de l'électro-aimant, la direction du déplacement étant sensiblement tangente à celle des lignes de champ magnétique créé par l'électro-aimant, des moyens (3;30) de mesure délivrant un signal (sd) représentatif du déplacement de ladite partie magnétique mobile (17) et connectés (F7) à un capteur muni de moyens inductifs ou capacitifs sensibles à la valeur de l'entrefer (18) existant entre la carcasse (1;1,1') et la partie mobile (17), des moyens (4) soustracteurs recevant sur une première entrée, positive, un signal (e) de commande de déplacement de la partie magnétique mobile (17), et, sur une deuxième entrée, négative, ledit signal représentatif du déplacement, ces moyens soustracteurs (4) délivrant un signal (ε) d'erreur de déplacement de la partie mobile (17) par rapport au signal de commande de déplacement, un circuit (CAC) amplificateur de courant recevant le signal d'erreur (ε) et délivrant un courant d'alimentation du bobinage (11;11,12) et des moyens de rappel (28; 12) de la partie magnétique mobile (17) exerçant sur celle-ci une force de rappel opposée à la force exercée par l'électro-aimant, caractérisé en ce que les moyens inductifs sensibles du capteur sont constitués par les bobinages (11;11,12) de l'électro-aimant et ses moyens capacitifs sensibles sont constitués par le condensateur formé par l'électro-aimant, l'entrefer (18) et la partie magnétique mobile (17).

2. Moteur linéaire selon la revendication 1, caractérisé en ce que celui-ci comportant une structure sensiblement symétrique, lesdits moyens (12) de rappel sont constitués par :

   - un contre électro-aimant, semblable à l'électro-aimant, ledit contre électro-aimant et l'électro-aimant étant disposés en vis-à-vis, carcasses (1'), (1), de part et d'autre de la partie magnétique mobile (17), un index (20) de guidage de la partie magnétique mobile s'étendant symétriquement par rapport à la partie magnétique mobile (17), le guidage de celle-ci étant simultanément assuré par la carcasse (1) de l'électro-aimant respectivement celle (1') du contre électro-aimant ;
   - des moyens (MCS) de commande symétrique de l'électro-aimant respectivement du contre électro-aimant, permettant de délivrer au bobinage respectif (11,12) de ces derniers un courant d'alimentation en excitation symétrique.

3. Moteur linéaire selon la revendication 2, caractérisé en ce que lesdits moyens (MCS) de commande symétrique comportent au moins des moyens (30) détecteurs du déplacement différentiel de ladite partie magnétique mobile (17), ces moyens détecteurs (30) délivrant à la borne négative dudit soustracteur (4) un signal (sd) représentatif du déplacement différentiel de la partie magnétique mobile (17) par rapport à la carcasse (1,1') de l'électro-aimant et du contre électro-aimant par rapport à une position d'origine d'équilibre.

4. Moteur linéaire selon la revendication 2 ou 3, caractérisé en ce que lesdits moyens (MCS) de commande symétrique comportent en outre un circuit (CAC) amplificateur de courant d'alimentation en excitation symétrique comportant, d'une part, un module (MOCS) de commande symétrique recevant le signal d'erreur délivré par les moyens soustracteurs (4) et délivrant un premier et un deuxième signal de commande d'excitation symétrique (sa,sb), et, d'autre part, deux amplificateurs (7,8) de courant recevant le premier respectivement le deuxième signal de commande d'excitation symétrique et délivrant au bobinage de l'électro-aimant (11), respectivement du contre électro-aimant (12), un courant d'alimentation en excitation symétrique.

**5.** Moteur linéaire selon la revendication 3, caractérisé en ce que lesdits moyens détecteurs (30) du déplacement différentiel sont de type inductif, permettant de mesurer l'inductance des deux bobinages (11), (12) de l'électro-aimant et du contre électro-aimant, lesdits moyens détecteurs comportant :

- des moyens de mesure de la tension ($U_{11}$) respectivement ($U_{12}$) appliquée au bobinage (11) respectivement (12) de l'électro-aimant respectivement du contre électro-aimant ;
- des moyens de mesure de la dérivée ($u_{11}$), ($u_{12}$) du courant d'alimentation du bobinage (11) respectivement (12) de l'électro-aimant respectivement du contre électro-aimant ;
- des moyens de calcul de l'inductance L de l'électro-aimant (11) respectivement du contre électro-aimant (12) et des valeurs d'entrefer (efa, efb) correspondantes, la valeur de l'inductance L vérifiant la relation :

$$L = \mu_0 . S . N^2 / 2ef \text{ où } ef = efa \text{ ou } ef = efb.$$

**6.** Moteur linéaire selon la revendication 3, caractérisé en ce que lesdits moyens (30) détecteurs du déplacement différentiel sont de type capacitif et formés par :

- un circuit en pont, ce circuit en pont comportant :

  . deux premières branches adjacentes formées par les capacités des entrefers (18), (19) constitués par la carcasse (1) de l'électro-aimant et la première face de la partie (17) magnétique mobile en vis-à-vis, respectivement par la carcasse (1') du contre électro-aimant et la deuxième face de la partie (17) magnétique mobile en vis-à-vis,

  . deux deuxièmes branches adjacentes formées par des résistances égales (20, 21),

  . une première diagonale formée par un générateur (220) de signaux périodiques dont la fréquence fondamentale est très supérieure à la fréquence de coupure du moteur linéaire asservi,

  . une deuxième diagonale délivrant un signal différentiel de mesure (vm) entre la partie (17) magnétique mobile et le point commun des deux deuxièmes branches adjacentes,

- un circuit démodulateur (22) à la fréquence des signaux périodiques, recevant ledit signal différentiel de mesure et délivrant le signal enveloppe d'amplitude du signal différentiel de mesure ;

- un circuit de filtrage (23) de type passe-bas recevant ledit signal enveloppe et délivrant ledit signal (sd) représentatif du déplacement différentiel de la partie magnétique mobile.

**7.** Moteur linéaire selon la revendication 4, caractérisé en ce que ledit module (MOCS) de commande symétrique linéaire comprend :

- un circuit (5) correcteur d'asservissement, permettant d'assurer la stabilité de l'asservissement en fonction de l'impédance mécanique ou charge à laquelle le moteur est relié, ce circuit recevant le signal d'erreur ($\varepsilon$) et délivrant un signal d'erreur corrigé ($\hat{\varepsilon}$) ;
- un circuit (6) linéarisateur permettant d'assurer une commande des bobinages (11, 12) de l'électro-aimant, respectivement du contre électro-aimant en asservissement du courant ou du flux magnétique, de façon à rendre le déplacement de la partie (17) magnétique mobile linéaire selon la direction de déplacement ($\Delta$) par rapport au signal de commande d'entrée ($\underline{e}$).

**8.** Moteur linéaire selon la revendication 7, caractérisé en ce que, dans le cas d'un asservissement en courant, ledit circuit redresseur-linéarisateur (6) comprend :

- un circuit (24) redresseur-séparateur délivrant, à partir du signal d'erreur corrigé ($\hat{\varepsilon}$) délivré par le circuit (5) correcteur d'asservissement, les alternances positives, respectivement négatives, redressées du signal d'erreur corrigé ($\hat{\varepsilon}$) ;
- un premier (25a) et un deuxième (25b) circuit de calcul de la racine carrée de l'amplitude desdites alternances positives, respectivement négatives, redressées du signal d'erreur corrigé ($\hat{\varepsilon}$) et délivrant deux signaux proportionnels à $\sqrt{\hat{\varepsilon}a}$, $\sqrt{\hat{\varepsilon}b}$
- un premier (27a) et un deuxième (27b) circuit multiplicateur de correction recevant les signaux ($\sqrt{\hat{\varepsilon}a}$), respectivement ($\sqrt{\hat{\varepsilon}b}$), délivrés par les circuits de calcul (25a), (25b) et eo-d, respectivement eo+d valeur instantanée des entrefers, et délivrant un premier (sa), respectivement un deuxième (sb) signal de commande symétrique audit premier (7), respectivement deuxième (8), amplificateur de courant.

**9.** Moteur linéaire selon la revendication 7, caractérisé en ce que, dans le cas d'un asservissement du flux magnétique de l'électro-aimant et du contre électro-aimant, ladite carcasse (1) de l'électro-aimant comporte au niveau de l'entrefer (18, 19) une sonde de mesure à effet Hall (27) délivrant un signal représentatif du flux magnétique, engendré dans cet entrefer, audit amplificateur de courant (7) respectivement (8).

10. Moteur linéaire selon la revendication 9, caractérisé en ce que ledit circuit linéarisateur (6) comprend :

- un circuit (24) redresseur-séparateur délivrant, à partir du signal d'erreur corrigé ($\varepsilon$) délivré par le circuit (5) correcteur d'asservissement, les alternances positives, respectivement négatives, redressées du signal d'erreur corrigé ($\hat{\varepsilon}$) ;
- un premier (25a) et un deuxième (25b) circuit de calcul de la racine carrée de l'amplitude desdites alternances positives, respectivement négatives, redressées du signal d'erreur corrigé ($\hat{\varepsilon}$) et délivrant deux signaux proportionnels à ($\sqrt{\hat{\varepsilon}a}$), ($\sqrt{\hat{\varepsilon}b}$) constituant respectivement les signaux de commande symétrique (sa, sb).

11. Moteur linéaire selon la revendication 7 ou 9, caractérisé en ce que lesdits circuits (5) correcteur d'asservissement et (6) linéarisateur sont formés par un processeur numérique programmé, ledit processeur permettant d'engendrer des consignes de courant à partir de consignes de flux magnétique Fa, Fb, ledit linéarisateur permettant d'engendrer à chaque bobinage (11, 12) un courant de même intensité donnée lorsque la force demandée est nulle, un courant incrémenté respectivement décrémenté d'une valeur différentielle, dans l'une respectivement l'autre bobine, par rapport au courant d'intensité donnée, lorsque la force demandée ne dépasse pas une valeur déterminée, et un courant nul respectivement un courant supérieur à deux fois le courant d'intensité donnée lorsque la force demandée atteint de fortes valeurs, supérieures à la valeur déterminée de force demandée.

12. Moteur linéaire selon l'une des revendications 1 à 11, caractérisé en ce que, en vue de constituer un moteur dont la partie mobile (17) est soumise à un déplacement en rotation par rapport à un centre de rotation (C), ladite partie magnétique mobile (17) comprend un axe de rotation (21) mécaniquement solidaire de ladite carcasse (1) et orthogonal au trajet de déplacement, ladite partie magnétique mobile étant montée à rotation autour dudit axe de rotation (21).

## Claims

1. Variable-reluctance servo-controlled linear motor comprising one electromagnet (1,9,11; 1,1', 9,10,11,12) exerting, during operation, a force of attraction and comprising a shell (1;1,1') forming a magnetic circuit (9;9,10) and a winding (11;11,12) around a linear displacement path, one magnetic portion (17), mobile in a direction of displacement and guided mechanically so as to have one and only one degree of freedom with respect to the shell (1; 1,1') of the electromagnet, the direction of the displacement being substantially tangential to that of the lines of the magnetic field created by the electromagnet, detector means (3,30) of the displacement of the said mobile magnetic portion (17) delivering a signal (sd) representative of the displacement of the said mobile magnetic portion, these detector means (3,30) being connected (F7) to an inductive or capacitive measurement sensor means of the instantaneous value of the air gap (18) existing between the shell (1;1,1') and the mobile magnetic portion (17), subtracter means (4) receiving on a first, positive input, a displacement control signal (e) for the mobile magnetic portion (17), and, on a second, negative input, the said signal representative of the displacement, these subtracter means (4) delivering a displacement error signal ($\varepsilon$) for the mobile portion (17) with respect to the displacement control signal, a current amplifier circuit (CAC) receiving the said error signal ($\varepsilon$) and delivering a supply current for the said winding (11;11,12) and restoring means (28,12) for the said mobile magnetic portion (17) exerting on the latter, a restoring force opposed to the force exerted by the electromagnet, characterised in that said inductive measurement sensor means are formed by said electromagnet windings (11;11,12) and said capacitive measurement sensor means are formed by the capacitor formed by the electromagnet, the air gap (18) and the mobile magnetic portion (17).

2. Variable-reluctance servo-controlled linear motor according to claim 1, characterised in that said motor comprises a substantially symmetrical structure, said restoring means (12) are constituted by :

- a counter-electromagnet, similar to the electromagnet, the said counter-electromagnet and the electromagnet being arranged facing one another, shell (1'), (1) on either side of the mobile magnetic portion (17), a guide finger (20) for the mobile magnetic portion (17) extending symmetrically with respect to the mobile magnetic portion (17) and the guiding of the mobile magnetic portion (17) in the course of operation being simultaneously ensured by the shell (1) of the electromagnet, respectively that (1') of the counter-electromagnet;
- means (MCS) of symmetric control of the electromagnet, respectively of the counter-electromagnet, making it possible to deliver to the respective winding (11,12) of these latter a supply current under symmetric excitation.

3. Variable-reluctance servo-controlled linear motor according to claim 2, characterised in that the said means (MCS) of symmetric control at least comprise detector means (30) of the differential displacement of the said mobile magnetic portion (17), the said detector means (30) delivering to the negative terminal of the said subtracter (4) a signal (sd) representative of the differential displacement of the mobile magnetic portion (17) with respect to the shell (1,1') of the electromagnet and of the counter-electromagnet with respect to an equilibrium origin position.

4. Variable-reluctance servo-controlled linear motor according to claim 2 or 3, characterised in that means (MCS) of symmetric control further comprise an amplifier circuit (CAC) of supply current under symmetric excitation including, on the one hand, a symmetric control module (MOCS) receiving the error signal delivered by the subtracter means (4) and delivering a first and a second symmetric excitation control signal (sa,sb) and, on the other hand, two current amplifiers (7,8) receiving the first, respectively the second, symmetric excitation control signal and delivering to the winding of the electromagnet (11), respectively of the counter-electromagnet (12), a supply current under symmetric excitation.

5. Variable-reluctance servo-controlled linear motor according to claim 3, characterised in that said detector means (30) of the differential displacement are of inductive type, and allow thus to measure the inductance value of the electromagnet and counter-electromagnet windings (11), (12), said detector means comprising:

   - means for measuring the voltage value ($U_{11}$) and ($U_{12}$) respectively applied to said windings (11), (12) of the electromagnet and counter-electromagnet;
   - means for measuring the feeding current derivative value ($u_{11}$), ($u_{12}$) delivered to said windings of said electromagnet and counter-electromagnet;
   - means for calculating the inductance value L of the electromagnet (11) and counter-electromagnet (12) and corresponding air gap values (efa,efb), said inductance value L verifying the relation :

$$L = \mu_0 S \cdot N^2 / 2ef$$

   in which ef = efa or ef = efb.

6. Variable-reluctance linear motor according to claim 3, characterised in that the said detector means (30) of the differential displacement are of capacitive type and formed by:

   - a bridge circuit, this bridge circuit including:

     ■ two first adjacent branches formed by the capacitances of the air gaps (18), (19) constituted by the shell (1) of the electromagnet and the first side of the facing mobile magnetic portion (17), respectively by the shell (1') of the counter-electromagnet and the second side of the facing mobile magnetic portion (17),
     ■ two second adjacent branches formed by equal resistances (20,21),
     ■ a first diagonal formed by a generator (220) of periodic signals whose fundamental frequency is much greater that the cut-off frequency of the servo-controlled linear motor,
     ■ a second diagonal delivering a differential signal for measurement (vm) between the mobile magnetic portion (17) and the common point of the two second adjacent branches,

   - a demodulator circuit (22) at the frequency of the periodic signals, receiving the said differential signal for measurement and delivering the amplitude envelope signal of the differential signal for measurement,
   - a filtering circuit (23) of low-pass type receiving the said envelope signal and delivering the said signal (sd) representative of the differential displacement of the mobile magnetic portion.

7. Variable-reluctance linear motor according to claim 4, characterised in that the said linear symmetric control module (MOCS) comprises:

   - a servo-control corrector circuit (5) enabling the stability of the servo-control to be ensured as a function of the mechanical impedance or load to which the motor is connected, this circuit receiving the error signal ($\varepsilon$) and delivering a corrected error signal ($\hat{\varepsilon}$),
   - a lineariser circuit (6) making it possible to ensure a control of the windings (11,12) of the electromagnet, respectively of the counter-electromagnet by servo-controlling the current or the magnetic flux, so as to render the displacement of the mobile magnetic portion (17) linear along the direction of displacement ($\Delta$) with respect to the input control signal (e).

8. Variable-reluctance linear motor according to claim 7, characterised in that in the case of current servo-control, the said lineariser circuit (6) comprises:

- a rectifier-separator circuit (24) delivering, from the corrected error signal $(\hat{\varepsilon})$ delivered by the servo-control corrector circuit (5), the rectified positive, respectively negative half-cycles of the corrected error signal $(\hat{\varepsilon})$,
- a first (25a) and a second (25b) circuit for calculating the square root of the amplitude of the said rectified positive, respectively negative half-cycles of the corrected error signal $(\hat{\varepsilon})$ and delivering two signals proportional to $\sqrt{\hat{\varepsilon}a}$, $\sqrt{\hat{\varepsilon}b}$,
- a first (27a) and a second (27b) multiplier circuits for correction receiving the signals $(\sqrt{\hat{\varepsilon}a})$, respectively $(\sqrt{\hat{\varepsilon}b})$, delivered by the calculation circuits (25a), (25b) and eo-d, respectively eo+d instantaneous value of the air gaps, and delivering a first (sa), respectively a second (sb), symmetric control signal to the said first (7), respectively second (8), current amplifier.

9. Variable-reluctance linear motor according to claim 7, characterised in that, in the case of a servo-control of the magnetic flux of the electromagnet and of the counter-electromagnet, the said shell (1) of the electromagnet includes, in the region of the air gap (18,19), a Hall-effect measurement probe (27) delivering a signal representative of the magnetic flux, developed in this air gap, to the said current amplifier (7) respectively (8).

10. Variable-reluctance linear motor according to claim 9, characterised in that the said lineariser circuit (6) comprises:

- a rectifier-separator circuit (24) delivering, from the corrected error signal $(\hat{\varepsilon})$ delivered by the servo-control corrector circuit (5), the rectified positive, respectively negative half-cycles of the corrected error signal $(\hat{\varepsilon})$,
- a first (25a) and a second (25b) circuit for calculating the square root of the amplitude of the said rectified positive, respectively negative half-cycles of the corrected error signal $(\hat{\varepsilon})$ and delivering two signals proportional to $\sqrt{\hat{\varepsilon}a}$, $\sqrt{\hat{\varepsilon}b}$, constituting the symmetric control signals (sa,sb) respectively.

11. Variable-reluctance linear motor according to claim 7 or 9, characterised in that the said servo-control corrector (5) and lineariser (6) circuits are formed by a programmed digital processor, the said processor making it possible to develop current set points from magnetic flux set points Fa, Fb, the said lineariser making it possible to develop in each coil (11,12) a current of given like intensity when the force requested is nil, a current which is incremented, respectively decremented by a differential value, in one respectively the other coil, with respect to the current of given intensity, when the force requested does not exceed a specified value, and a nil current respectively a current greater than twice the current of given intensity when the force requested reaches high values, greater than the specified value of force requested.

12. Variable-reluctance linear motor according to one of preceding claims, characterised in that, with a view to constructing a motor whose mobile portion (17) is subjected to a rotational displacement with respect to a centre of rotation (C), the said mobile magnetic portion (17) comprises a rotation spindle (21) mechanically integral with the said shell (1) and orthogonal to the displacement path, the said mobile magnetic portion being mounted rotatably about the said rotation spindle (21).

**Patentansprüche**

1. Linearservomotor mit veränderlicher Reluktanz, enthaltend einen Elektromagneten (1, 9, 11; 1, 1', 9, 10, 11, 12), der im Betrieb eine Zugkraft ausübt und einen Kern (1; 1, 1') enthält, der einen Magnetkreis (9; 9, 10) bildet, ferner eine Wicklung (11; 11, 12), die eine lineare Bewegungsbahn umschließt, weiterhin einen Magnetteil (17), der in einer Bewegungsrichtung beweglich ist und mechanisch derart geführt ist, daß er gegenüber dem Kern (1; 1, 1') des Elektromagneten einen einzigen Freiheitsgrad besitzt, wobei die Bewegungsrichtung im wesentlichen tangential zur Richtung der vom Elektromagneten erzeugten Kraftlinien des Magnetfeldes verläuft, ferner enthaltend eine Meßeinrichtung (3; 30), die ein Signal (sd) liefert, das repräsentativ für die Bewegung des beweglichen Magnetteiles (17) ist, wobei diese Meßeinrichtung mit einem Aufnehmer verbunden ist (F7), der mit induktiven oder kapazitiven Elementen versehen ist, die auf die Größe des zwischen dem Kern (1; 1, 1') und dem beweglichen Teil (17) bestehenden Spaltes (18) ansprechen, ferner enthaltend eine Subtraktionseinrichtung (4), die an einem ersten, positiven Eingang ein Signal (e) zur Steuerung der Bewegung des beweglichen Magnetteiles (17) erhält und an einem zweiten, negativen Eingang das Signal, das repräsentativ für die Bewegung ist, so daß diese Subtraktionseinrichtung (4) ein Fehlersignal (ε) entsprechend der Abweichung der Bewegung des beweglichen Teiles (17) vom Steuersignal dieser Bewegung liefert, weiterhin enthaltend einen Stromverstärkerkreis (CAC), der das Fehlersignal (ε) erhält und einen Speisestrom für die Wicklung (11; 11, 12) liefert, enthaltend schließlich eine Rückführeinrichtung (28; 12) für den beweglichen Magnetteil (17), der auf diesen Magnetteil eine Rückführkraft ausübt, die der vom Elektromagneten erzeugten Kraft entgegenwirkt, dadurch gekennzeichnet, daß die induktiven Elemente des Aufnehmers aus den Wicklungen (11; 11, 12) des Elektromagneten und die kapazitiven Elemente aus dem Kondensator bestehen, der vom Elektromagneten, dem Spalt (18) und dem beweglichen Magnetteil (17) gebildet wird.

2. Linearmotor nach Anspruch 1, dadurch gekennzeichnet, daß er einen im wesentlichen symmetrischen Aufbau besitzt und daß die Rückführeinrichtung (12) gebildet wird durch

- einen gleichartig wie der Elektromagnet ausgebildeten Gegenelektromagneten, wobei der Gegenelektromagnet und der Elektromagnet einander gegenüber angeordnet und Kerne (1', 1) auf beiden Seiten des beweglichen Magnetteiles (17) vorgesehen sind, einen zur Führung des beweglichen Magnetteiles dienender Finger (20) symmetrisch gegenüber dem beweglichen Magnetteil (17) angeordnet ist und die Führung dieses Fingers gleichzeitig durch den Kern (1) des Elektromagneten und den Kern (1') des Gegenelektromagneten bewirkt wird;

- sowie Steuerelemente (MCS) zur symmetrischen Steuerung des Elektromagneten bzw. des Gegenelektromagneten, wobei diese Steuerelemente einen Speisestrom zur symmetrischen Erregung an die jeweilige Spule (11, 12) von Elektromagnet bzw. Gegenelektromagnet liefern.

3. Linearmotor nach Anspruch 2, dadurch gekennzeichnet, daß die Steuerelemente zur symmetrischen Steuerung wenigstens eine Detektoreinrichtung (30) zur Feststellung einer Differential-Bewegung des beweglichen Magnetteiles (17) enthalten, wobei diese Detektoreinrichtung (30) an den negativen Anschluß der Subtraktionseinrichtung (4) ein Signal (sd) liefert, das repräsentativ ist für die differentielle Bewegung des beweglichen Magnetteiles (17) gegenüber dem Kern (1, 1') des Elektromagneten und des Gegenelektromagneten bezogen auf eine ursprüngliche Gleichgewichtsstellung.

4. Linearmotor nach Anspruch 2 oder 3, dadurch gekennzeichnet, daß die Steuerelemente (MCS) zur symmetrischen Steuerung außerdem eine Stromverstärkerschaltung (CAC) für symmetrische Erregung enthalten, die einerseits ein Modul (MOCS) für symmetrische Steuerung aufweist, das das von der Subtraktionseinrichtung (4) gelieferte Fehlersignal aufnimmt und ein erstes sowie zweites Steuersignal symmetrischer Erregung (sa, sb) liefert, und die andererseits zwei Stromverstärker (7, 8) enthält, die das erste bzw. zweite Steuersignal symmetrischer Erregung erhalten und die an die Wicklung des Elektromagneten (11) bzw. des Gegenelektromagneten (12) einen Speisestrom zur symmetrischen Erregung liefern.

5. Linearmotor nach Anspruch 3, dadurch gekennzeichnet, daß die Detektoreinrichtung (30) zur Feststellung einer differentiellen Bewegung eine induktive Bauweise aufweist und eine Messung der Induktivität der beiden Wicklungen (11, 12) des Elektromagneten und des Gegenelektromagneten ermöglicht, wobei diese Detektoreinrichtung folgende Elemente enthält

- Elemente zur Messung der Spannung ($U_{11}$ bzw. $U_{12}$) an der Wicklung (11 bzw. 12) des Elektromagneten bzw. des Gegenelektromagneten,

- Elemente zur Messung der Ableitung ($u_{11}$, $u_{12}$) des Speisestromes der Wicklung (11 bzw. 12) des Elektromagneten bzw. des Gegenelektromagneten,

- Rechenelemente zur Bestimmung der Induktivität L des Elektromagneten (11) bzw. des Gegenelektromagneten (12) und der entsprechenden Spaltwerte (efa, efb), wobei die Induktivität L durch die Beziehung gegeben ist:

$$L = \mu_0 S \cdot N^2 / 2ef,$$

wobei ef = efa oder ef= efb.

6. Linearmotor nach Anspruch 3, dadurch gekennzeichnet, daß die Detektoreinrichtung (30) zur Bestimmung der differentiellen Bewegung eine kapazitive Bauweise aufweist und durch folgende Elemente gebildet wird:

- eine Brückenschaltung, enthaltend

 · zwei aneinanderstoßende erste Zweige, die von den Kapazitäten der Spalte (18, 19) gebildet werden, die zwischen dem Kern (1) des Elektromagneten und der gegenüberliegenden ersten Seite des beweglichen Magnetteiles (17) bzw. zwischen dem Kern (1') des Gegenelektromagneten und der gegenüberliegenden zweiten Seite des beweglichen Magnetteiles (17) vorhanden sind,

 · zwei benachbarte zweite Zweige, die von gleichen Widerständen (20, 21) gebildet werden,

 · eine erste Diagonale, die von einem Generator (220) zur Erzeugung periodischer Signale gebildet wird, deren Grundfrequenz wesentlich höher als die Abschaltfrequenz des Linearservomotors ist,

- eine zweite Diagonale, die ein differentielles Meßsignal (vm) liefert und zwischen dem beweglichen Magnetteil (17) und dem gemeinsamen Punkt der beiden zweiten benachbarten Brückenzweige angeordnet ist,

- eine Demodulatorschaltung (22) für die Frequenz der periodischen Signale, wobei diese Demodulatorschaltung das differentielle Meßsignal erhält und ein Signal liefert, das der Umhüllenden der Amplitude des differentiellen Signales entspricht,

- einen als Tiefpaß ausgebildeten Filterkreis (23), der das genannte Signal der Umhüllenden erhält und ein Signal (sd) liefert, das repräsentativ für die differentielle Bewegung des beweglichen Magnetteiles ist.

7. Linearmotor nach Anspruch 4, dadurch gekennzeichnet, daß das Modul (MOCS) zur symmetrischen Linearsteuerung folgende Schaltungen enthält

- eine Servokorrekturschaltung (5), die die Stabilität der Servosteuerung in Abhängigkeit von der mechanischen Impedanz bzw. Belastung gewährleistet, mit der der Motor verbunden ist, wobei diese Schaltung das Fehlersignal (ε) erhält und ein korrigiertes Fehlersignal (ε̂) liefert,

- eine Linearisierungsschaltung (6), die eine Steuerung der Wicklungen (11, 12) des Elektromagneten bzw. des Gegenelektromagneten in Servoabhängigkeit vom Strom oder vom Magnetfluß bewirkt, so daß die Bewegung des beweglichen Magnetteiles (17) linear in Bewegungsrichtung (Δ) bezogen auf das Eingangssteuersignal (e) gemacht wird.

8. Linearmotor nach Anspruch 7, dadurch gekennzeichnet, daß für den Fall einer Strom-Servosteuerung die Gleichrichtungs-Linearisierungsschaltung (6) folgende Teile enthält:

- eine Gleichrichter-Trennschaltung (24), die ausgehend von dem korrigierten Fehlersignal (ε̂), das von der Servokorrekturschaltung (5) geliefert wird, gleichgerichtete positive bzw. negative Halbwellen des korrigierten Fehlersignales (ε̂) liefert,

- eine erste und eine zweite Rechenschaltung (25a, 25b) zur Bestimmung der Quadratwurzel der Amplitude der gleichgerichteten positiven bzw. negativen Halbwellen des korrigierten Fehlersignales (ε̂) und zur Lieferung von zwei Signalen proportional $\sqrt{\hat{\varepsilon}a}$ bzw. $\sqrt{\hat{\varepsilon}b}$,

- eine erste und eine zweite Korrektur-Multiplizierschaltung (27a, 27b), die die Signale ($\sqrt{\hat{\varepsilon}a}$ bzw. $\sqrt{\hat{\varepsilon}b}$) erhalten, die von den Rechenschaltungen (25a, 25b) geliefert werden, ferner die augenblicklichen Spaltwerte eo-d bzw. eo+d, und die ein erstes bzw. ein zweites symmetrisches Steuersignal (sa bzw. sb) an den ersten bzw. zweiten Stromverstärker (7 bzw. 8) liefern.

9. Linearmotor nach Anspruch 7, dadurch gekennzeichnet, daß im Falle einer Servosteuerung entsprechend dem Magnetfluß des Elektromagneten und des Gegenelektromagneten der Kern (1) des Elektromagneten auf dem Niveau des Spaltes (18, 19) eine zur Messung des Hall-Effektes dienende Sonde (27) aufweist, die an den Stromverstärker (7 bzw. 8) ein Signal liefert, das repräsentativ für den in diesem Spalt erzeugten Magnetfluß ist.

10. Linearmotor nach Anspruch 9, dadurch gekennzeichnet, daß die Linearisierungsschaltung (6) folgende Teile enthält:

- eine Gleichrichter-Trennschaltung (24), die ausgehend von dem korrigierten Fehlersignal (ε̂), das von der Servokorrekturschaltung (5) geliefert wird, die gleichgerichteten positiven bzw. negativen Halbwellen des korrigierten Fehlersignales (ε̂) liefert,

- eine erste und eine zweite Rechenschaltung (25a, 25b) zur Bestimmung der Quadratwurzel der Amplitude der gleichgerichteten positiven bzw. negativen Halbwellen des korrigierten Fehlersignales (ε̂), wobei diese Rechenschaltungen zwei Signale proportional ($\sqrt{\hat{\varepsilon}a}$ bzw. $\sqrt{\hat{\varepsilon}b}$) liefern, die jeweils die symmetrischen Steuersignale (sa, sb) bilden.

11. Linearmotor nach Anspruch 7 oder 9, dadurch gekennzeichnet, daß die Servokorrekturschaltung (5) und die Linearisierungsschaltung (6) durch einen programmierten numerischen Prozessor gebildet werden, der ausgehend von magnetischen Flußsignalen (Fa, Fb) Stromsignale erzeugt, wobei die Linearisierungsschaltung in jeder Wicklung (11, 12) einen Strom vorgegebener gleicher Größe erzeugt, wenn die gewünschte Kraft gleich null ist, dagegen einen Strom, der um einen differentiellen Wert in der einen bzw. anderen Wicklung gegenüber dem Strom vorgegebener Stärke vergrößert oder verkleinert ist, solange die gewünschte Kraft einen vorbestimmten Wert nicht übersteigt, und die dann, wenn die gewünschte Kraft hohe Werte erreicht, die über dem vorbestimmten Wert der gewünschten Kraft liegen, einen Strom null bzw. einen Strom, der mehr als zweimal so groß wie der Strom vorgegebener Stärke ist, erzeugt.

12. Linearmotor nach einem der Ansprüche 1 bis 11, dadurch gekennzeichnet, daß zur Erzeugung eines Motors, dessen beweglicher Teil (17) eine Drehbewegung gegenüber einem Rotationszentrum (C) ausführt, der bewegliche Magnetteil (17) eine Rotationsachse (21) aufweist, die mechanisch fest mit dem Kern (1) verbunden ist und senkrecht zur Bewegungsbahn verläuft, wobei der bewegliche Magnetteil drehbeweglich um diese Drehachse (21) angeordnet ist.

FIG.1.

FIG.2.

EP 0 544 576 B1

FIG. 3a.

FIG.3b.

$$\mu_{11} = K \frac{d I\,11}{d t}$$

$$\mu_{12} = K \frac{d I\,12}{d t}$$

FIG.3c.

COUPE.c_c

FIG.3d.

PRIMAIRE

SECONDAIRE

U: PROPORTIONNEL À I

u: PROPORTIONNEL À $\dfrac{dI}{dt}$

FIG.5c.

ZONE OÙ SEULE UNE BOBINE EST ALIMENTÉE

ZONE OÙ LES DEUX BOBINES SONT ALIMENTÉES

ZONE OÙ SEULE UNE BOBINE EST ALIMENTÉE

MODE COMMUTÉ

MODE DIFFÉRENTIEL

MODE COMMUTÉ

# FIG.4.

# FIG.5a.

# FIG.5b.

# FIG.6a.

# FIG.6b.